# EUROPEAN PATENT APPLICATION

(11) **EP 4 478 600 A1**
(43) Date of publication of application: **18.12.2024**
(21) Application number: 23179714.3
(22) Date of filing: 16.06.2023
(51) Int. Cl.: H02N 2/00, H02N 2/02, H02N 2/10

(54) **OSCILLATING DRIVE ELEMENT AND DRIVE UNIT**

(71) Applicant: MINISWYS SA, 2502 Biel (CH)
(72) Inventor: HOESLI, Raphaël, 2502 Biel (CH); FILOTTO, Francesco, 2502 Biel (CH); PRUIJS, Benjamin, 2502 Biel (CH); VAN DOMMELEN, Ryan, 2502 Biel (CH)
(74) Representative: Frei Patent Attorneys

(57) **Abstract**

A drive element serves for driving a **passive element** (4) relative to an **active element** (1). The active element (1) comprises a **resonator** (2) and an oscillating **excitation means** (23), and **at least one arm** (21) extending in an **arm direction** (21a) and comprising, at an outer end, a contact element (31) that is movable by way of oscillating movements of the arm (21), for driving the passive element (4). The arm (21) comprises, at its outer end, a contact element (31) driving a **contact area** (41) of the passive element (4). At least one of the following is the case:
• the contact element (31) comprises an **insert** (80) made of a material that is made from a material that is different from the material of the resonator (2), in particular harder than the material of the resonator (2);
• a **first wear suppressing element** (83) is arranged on the contact element (31) and a **second wear suppressing element** is (84) arranged on the passive element (4) in the contact area (41);
• the passive element (4) is made of a wear suppressing material.

## Description

The invention relates to the field of oscillatory drives. It relates to a drive element and a drive unit as described in the claims.

US 6'768'245 B1, based on WO 01/41228 A1, discloses a piezoelectric motor, with which a drive element, comprising a piezo element and contact elements, is elastically suspended, and by the piezo element is set into oscillations for driving a further body or passive element, by way of the contact elements.

US 7'429'812 B1 discloses a piezoelectric drive unit with a resonator which comprises at least two arms, arranged to extend from the same side of the resonator. Contact elements are located at the outer ends of the arms, and can be moved together or apart by way of oscillating movements of the arm pair, by which means a relative movement of a passive element with respect to an active element carrying the resonator can be effected. The passive element can be made to be elastic in itself. Alternatively or in addition, the passive element can be elastically supported relative to the arm pair. These measures allow to transfer the oscillating movement and resulting forces exerted by the two arms in an efficient manner, and/or to compensate for imperfect alignment of the parts. In an embodiment, the contact elements at the outer ends of the arms face outwards, and the passive element comprises two surfaces facing one another, between which the resonator is arranged to move.

There is a need to provide a drive element or drive unit with improved efficiency, that is with higher driving forces and/or with lower losses in the transfer of forces between the active element and the passive element, preferably in both driving directions. A further need is to increase the lifetime of such drives.

These objects are achieved by a drive element and a drive unit according to the claims.

The drive element serves for driving a **passive element** relative to an **active element,** wherein the active element comprises
a **resonator** and at least one **excitation means** for exciting oscillations in the resonator, the resonator and the arm extending in a plane, to be called **reference plane** from now on,
the arm comprising, at an outer end of the arm, a **contact element,**
the contact element being movable by way of oscillating movements of the arm,
the passive element being arranged to be driven and moved relative to the active element by way of these oscillating movements;
the passive element comprising a **contact area,** the contact area being arranged to be in contact with the contact element.

Therein, at least one of the following is the case:
- the contact element comprises an **insert** made of a material that is made from a material that is different from the material of the resonator, in particular harder than the material of the resonator;
- a **first wear suppressing element** is arranged on the contact element and a **second wear suppressing element** is arranged on the passive element in the contact area;
- the passive element is made of a wear suppressing material.

The effect of the contact element comprising an insert made of a different material is that it allows to adapt its tribological and force-transmitting properties independent from the material of the resonator. The material can be harder and more resistant to abrasion than the resonator. However, also softer materials can be more resistant to abrasion.

The effect of having the first wear suppressing element and second wear suppressing element is that this allows to choose material pairings with desired tribological and force-transmitting properties. The first wear suppressing element can be an insert as described herein.

The effect of making the passive element of a wear suppressing material is that it allows to simplify the construction of the passive element. This is generally easier to accomplish, since the passive element oscillates with smaller amplitudes, compared to the active element, or not at all, and therefore conditions on dynamic properties of the passive element are less stringent. The second wear suppressing element can be implemented by manufacturing the passive element of the wear suppressing material.

The effect of improved tribological and force-transmitting properties is to improve friction between the contact partners, that is, the contact element and the contact area, and thereby improve the efficiency of the drive.

The effect of wear suppressing materials is to reduce or eliminate abrasion of one or both of the contact partners. This in turn reduces fouling of the drive by abraded material. By reducing wear, it reduces degradation of the quality of the drive's operation and increases the lifetime of the drive.

Exciting oscillations in the resonator causes the arm to exhibit oscillating movements that typically are parallel to the reference plane. The term "parallel to" also encompasses the meaning "within", that is, parallel with zero distance.

The at least one arm extends in a direction to be called the arm direction from now on. If more than one arm is present, their respective ann directions can be in parallel.

In embodiments, the **first** wear suppressing element is made of a different material, in particular a material with a higher degree of hardness than the material of the arm or is created by a hardening treatment of the material of the arm), or is created by coating the arm with a material other than the material of the ann.

In embodiments, the **second** wear suppressing element is made of a different material, in particular a material with a higher degree of hardness than a surrounding region of the passive element or is created by a hardening treatment of the material of the passive element, or is created by coating the passive element with a material other than the material of the passive element.

In embodiments, the respective first or second wear suppressing element is made of one of
- a ceramic material, in particular a silicate, more in particular mullite;
- a plastic material, in particular a reinforced plastic material, more in particular a fibre reinforced plastic material;
- a palladium alloy, in particular a palladium-silver alloy, such as Pd75Ag25, Pd60Ag40;
- molybdenum;
- a ceramic-metal composite, in particular a mullite-molybdenum composite, such as Mu/Mo-3, Mu/Mo-9;
- a nickel alloy, in particular a nickel aluminium alloy, such as Ni-50Al, Ni-48Al, Ni-45Al;
- an amorphous nickel alloy (Vulcam Alloy).

Preferred combinations of material classes for the first wear suppressing element (which can be an insert, coating, treated resonator material etc) and second wear suppressing element (which can be an insert, coating, treated passive element material, etc.) and the contact area on the passive element 4 are, for example (in the order of: first wear suppressing element 83 - second wear suppressing element 84):
- zirconia - zirconia;
- zirconia - palladium alloy;
- alumina - zirconia;
- silicon carbide - zirconia;
- silicon-nitrate - zirconia;
- zirconia - plastic or reinforced plastic.

In embodiments, a contact surface of the **insert** at which it comes into contact with the contact area of the passive element has the shape of a **cylindrical** surface. In particular, a cylinder axis of this cylindrical surface is normal to the reference plane.

This has the effect that the cylindrical shape of the surface, seen in a projection on the reference plane, does not present a sharp edge to the contact area on the passive element. This reduces initial wear of the insert and/or the opposing contact area that would be caused by highly concentrated forces.

In embodiments, the insert has the shape of a **cylinder** or a **half-cylinder.**

This has the effect that the insert and a corresponding attachment surface of the arm to which it is attached can be manufactured as simple shapes. That is, if the insert is a cylinder, such an attachment surface can be a cylindrical gluing recess or a clamping recess. If the insert is a half cylinder, with a flat section parallel to the cylinder axis, the attachment surface can be flat as well.

In embodiments, a contact surface of the **insert** at which it comes into contact with the contact area of the passive element has the shape of an **ellipsoidal** surface, in particular the shape of a rotational ellipsoid or spheroid.

This has the effect that the surface in no direction presents a sharp edge to the contact area on the passive element. This makes the assembly more robust with regard to small angular misalignments that otherwise would result in the sharp edge being in contact with the surface of the passive element.

In embodiments, the insert has the shape of an ellipsoid, in particular the shape of a rotational ellipsoid, or a corresponding half-shape. More in particular, the insert can have the shape of a sphere or a half-sphere.

This has an effect analogous to that of the insert being cylindrical or half-cylindrical.

In embodiments, the insert is **attached** to the resonator by a **press fit** of the insert in a **clamping recess** of the resonator.

This has the effect, on the one hand, of allowing for precise positioning when assembling. On the other hand, as opposed to gluing, it eliminates dampening by the glue and thus allows for reduced power loss and better force transmission.

In embodiments, the insert is **attached** to the resonator by the insert being glued on an attachment surface of the contact element, in particular in a gluing recess of the resonator. Gluing is considered synonymous with adhesive bonding.

This allows for a simpler manufacturing of the resonator, as opposed to clamping, thereby reducing manufacturing complexity and cost. Manufacturing tolerances can be less tight, and the resonator can be manufactured by etching or stamping.

In embodiments, the contact area is pressed against the contact element with a pre-stress force that has a non-zero component (Fnz) that is normal to the reference plane.

This has the effect that a larger variety of geometric relations between the active element and passive element can be implemented. This in turn leads to greater freedom in the design of the drive.

Such an oblique prestress force is well suited in combination with an ellipsoidal shape (including special cases of "ellipsoidal") of the insert, or in combination with a cylindrical shape, with the axis of the cylinder being parallel to the reference plane and at least approximately parallel to a direction of relative movement between the active element and the passive element.

The pre-stress force acts between the contact area and contact element at least when the drive unit is not oscillating, that is, when the excitation means are not being excited. A pre-stress element can be arranged to exert a relative force between the active element and passive element. The pre-stress element can be implemented by one or more of elastic sections of the active element, elastic sections in the passive element, and elastic sections in a kinematic chain linking the active element to the passive element.

In embodiments with two arms, each contact area is pressed against the respective contact element with a pre-stress force that has a component that is normal to the reference plane.

In embodiments, one or more inserts are arranged asymmetrically in relation to a bisecting plane, the bisecting plane being parallel to the reference plane and the resonator being essentially mirror-symmetric relative to the bisecting plane; in particular wherein contact points at which the insert is in contact with the passive element are arranged asymmetrically in relation to the bisecting plane.

This also has the effect that a larger variety of geometric relations between the active element and passive element can be implemented.

The **drive unit** serves for driving a **passive element** relative to an **active element.** The active element comprises at least two drive elements, the at least two drive elements in combination comprising a common resonator extending in a common reference plane, and a first arm and second arm arranged to drive a common passive element, and in particular wherein the first arm and second arm are arranged in mirror symmetry, with a resonator axis being its axis of symmetry.

In embodiments, a resonator axis bisects an angle between the arm direction of the first arm and the arm direction of the second arm. In embodiments, the arm direction of the first arm and the arm direction of the second arm are parallel to one another.

In embodiments of the drive unit, the first arm comprises a first contact element and a first protrusion, and the second arm comprises a second contact element and a second protrusion, and wherein the first contact element and second contact element extend **toward** one another, and in particular where in the first protrusion and second protrusion extend **away from** one another.

In other words, the two arms are arranged to drive a passive element with contact areas arranged at the **inside** of the arms, and so for each arm the first direction (of the respective protrusion) points **outward,** away from the other arm, and the second direction (of the respective contact element) points **inward,** towards the other arm. This configuration can be called "inner drive", since the passive element is arranged at an inner side of the arms. Here, in the context of two arms, the term "inward" is understood in relation to a region between the two arms. Seen from one of the arms, a direction towards the other arm is "inward".

In embodiments of the drive unit the first arm comprises a first contact element and a first protrusion, and the second arm comprises a second contact element and a second protrusion, and wherein the first contact element and second contact element extend **away from** one another, and in particular where in the first protrusion and second protrusion extend **toward** one another.

In other words, the two arms are arranged to drive a passive element with contact areas arranged at the **outside** of the arms, and so for each arm the first direction (of the respective protrusion) points **inward,** towards the other arm, and the second direction (of the respective contact element) points **outward,** away from the other arm. This configuration can be called "outer drive".

In embodiments, the drive unit as a whole is configured for a **pre-stress** force to be present between the respective contact elements of the active elements and the contact areas of the passive element when the drive is not oscillating, that is, when the excitation means are not being excited.

The presence of the pre-stress force, in combination with the inner drive arrangement, causes, even when the drive is not oscillating, a stabilising force with regard to the angle between the passive element and the active element.

In embodiments of the drive element or the drive unit the resonator comprises a first surface and an opposed second surface, both parallel to the reference plane, and wherein one excitation means is arranged on the first surface and optionally wherein another excitation means is arranged on the second surface.

In embodiments of the drive element or the drive unit the passive element is arranged to translate along a **linear** movement axis, the linear movement axis being parallel to the reference plane, and in particular, for the drive unit, also parallel to the resonator axis.

In embodiments of the drive element or the drive unit the passive element is arranged to rotate around a **rotary** movement axis, the rotary movement axis being parallel to the reference plane, and in particular, for the drive unit, also perpendicular to the resonator axis.

In embodiments of the drive element or the drive unit the contact elements each comprise flat regions.

In embodiments of the drive element or the drive unit a resonator length is defined as the dimension of the resonator along the resonator axis, from the ends of the arms to the opposing ends of their counterweight sections, and wherein the extension (d) of each flat region, projected onto the reference plane, is between one tenth and one hundredth of the resonator length, in particular between one twentieth and one eightieth of the resonator length.

In embodiments of the drive element or the drive unit the length of the resonator is between three and five millimetres, in particular four millimetres, and the extension (d) of the flat region is between 0.05 millimetres and 0.15 millimetres, in particular between 0.08 millimetres and 0.12 millimetres, in particular 0.1 millimetres.

For all embodiments according to all aspects, one or more of the following can be the case:
The resonator is shaped from a flat piece of material. In embodiments, the resonator is cut from a blank by laser cutting. If lower tolerances are acceptable, it can be cut by etching or stamping.

An arm extending from the connection region can be said to be connected to a connection region or excitation region at a proximal end of the arm, and its contact element is arranged at a distal end of the arm. Given two arms, a common direction in which the arms extend can correspond to a **resonator axis.** The resonator with the excitation means and without the arms can be mirror-symmetric with regard to the resonator axis, e.g. when seen in a projection onto the reference plane. The resonator including the arms can be substantially mirror-symmetric with regard to the resonator axis.

With regard to the resonator axis, generally one or more of the following can be the case:
- the connection region comprises at least one fixation or support area, at which the resonator is attached to a base, and which is located on the resonator axis; and/or
- the resonator axis, seen in a direction normal to the reference plane, passes through the centre of the excitation means; and/or
- the resonator axis lies in regions of the resonator and/or the excitation means where oscillation amplitudes are the lowest.

The oscillating movements of the arm or arms can cause corresponding contact elements to move towards one another and away from another, which can be the result of each contact element moving along a generally ellipsoidal path. Movement of each path can be clockwise or counter clockwise (seen in the plane of the resonator), and the orientation of the main axes of the ellipsoid can vary. The movement direction and orientation can be controlled by adjusting an excitation frequency of the excitation means. The excitation means typically is a piezoelectric element. Further details of such drives are described in the initially cited US'768'245 B1 and US'429'812 B1. The ellipsoidal movement can correspond to a very flat ellipse, and thereby can also correspond to an almost linear or entirely linear back and forth movement. In such cases the orientation of this back-and-forth movement determines the way in which the passive element is driven. In particular, the orientation of the movement, in combination with an amplitude of the movement also affects a driving force.

A contact element (part of the active element) touches the contact body (part of the passive element) at contact areas. It can be the case that the drive is configured for a pre-stress force to be present between the contact elements of the active element and the contact areas of the passive element when the drive is not oscillating, that is, when the excitation means are not being excited. Contact forces related to a pre-stress, if present, will be generally normal to the contact surfaces where the parts touch, and in particular normal to a contact surface in the contact area, in particular normal to a tangent plane thereof. The entirety of such a contact or pre-stress force can be normal to the contact surfaces, or such a force can be at an angle to the normal, with only a vector component of the force being normal to the contact surface.

It is understood that being in contact can mean being in contact intermittently during operation of the drive unit, as the oscillating arms intermittently are in contact and move away from the respective areas on the contact body.

In embodiments, the resonator of the active element is manufactured in one piece. For example, it is manufactured from a single piece of sheet material, for example, from a sheet of metal. In embodiments, the material is stainless steel, in particular stainless steel 1.4310, also known as X10CrNil8-8 steel.

In embodiments, the resonator comprises a first surface and an opposed second surface, both parallel to the reference plane, and therein one excitation means is arranged on the first surface and optionally another excitation means is arranged on the second surface.

Typically, the **passive element is arranged to translate** along a linear movement axis, the linear movement axis being parallel to the reference plane, and in particular also parallel to the resonator axis.

In embodiments, **the passive element is arranged to rotate** around a rotary movement axis, the rotary movement axis being parallel to the reference plane, and in particular also perpendicular to the resonator axis.

In a **method** for operating the drive unit, the excitation means is supplied with an electrical voltage at different frequencies, thereby generating different movement patterns of the arm or arms and the contact regions, according to the frequency. Different movement patterns cause the passive element to move linearly, according to a degree of freedom defined by a suspension of the passive element relative to the active element. The suspension can be based on a slide bearing or a roller bearing, for example.

Throughout the present text, where parts are manufactured from a single piece of sheet material, for example, from a sheet of metal, this can done by a subtractive process, such as cutting or stamping or etching as well as by an additive process, such as selective laser melting, electron beam melting or direct metal laser sintering.

In embodiments, the contact elements each comprise a flat region.

In embodiments, a resonator length is defined as the dimension of the resonator along the resonator axis (for a symmetric arrangement of more than one arm) or along an arm direction (if only one arm is present), from the ends of the arm or arms to the opposing ends of the arms, in particular of their counterweight sections, and the extension of each flat region, projected onto the reference plane, is between one tenth and one hundredth of the resonator length, in particular between one twentieth and one eightieth of the resonator length.

Further embodiments are evident from the dependent patent claims.

The subject matter of the invention will be explained in more detail in the following text with reference to exemplary embodiments which are illustrated in the attached drawings, which schematically show:
- Figure 1: a drive element according to a first embodiment;
- Figure 2-4: different drive types;
- Figure 5-7: different ways in which inserts can be attached to the resonator;
- Figure 8-10: different shapes of inserts;
- Figure 11-12: different types of passive elements and different ways of implementing a wear suppressing element; and
- Figure 13: a pre-stress force Fn that has a non-zero component Fnz that is normal to the plane of the resonator.

The reference symbols used in the drawings, and their meanings, are listed in summary form in the list of reference symbols. In principle, identical parts are provided with the same reference symbols in the figures.

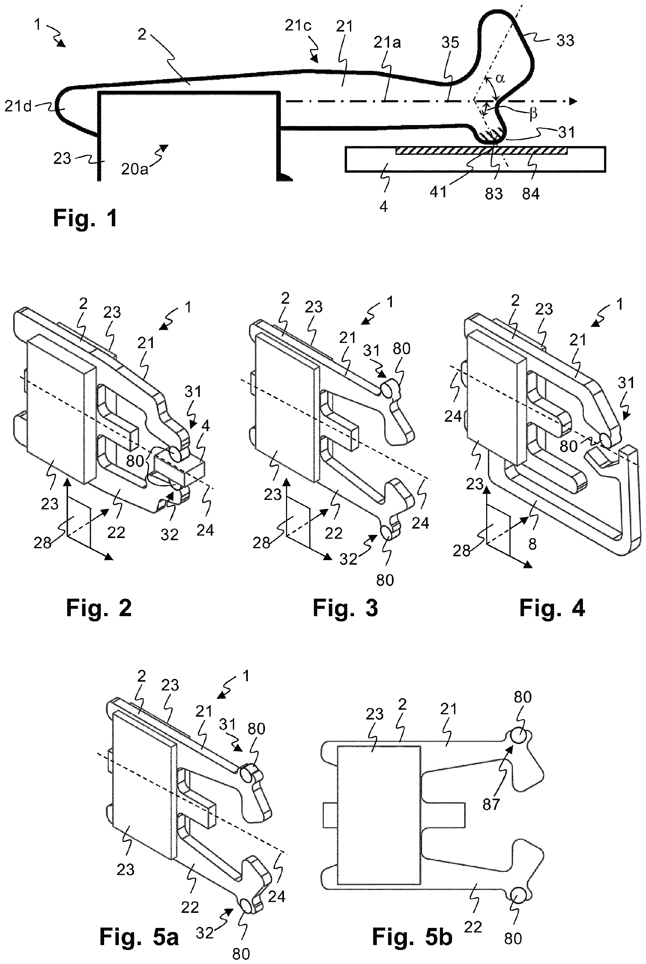

**Figure 1** schematically shows a drive element according to a first embodiment, with an active element 1 and a passive element 4. The active element 1 comprises a resonator 2 or resonator plate 2 and an excitation means 23. The excitation means 23 is arranged to drive an excitation region 20a of the resonator 2, causing oscillating movements of an arm 21 attached to the excitation region 20a. From the excitation region 20a of the resonator 2, the arm 21 extends in an arm direction 21a. The arm direction extends along a longitudinal axis of the arm 21. The longitudinal axis passes through a region where the arm 21 is attached to the resonator's excitation region and through a region where the protrusion 33 and contact element 31 are attached to the arm 21.

The resonator 2 and the arm 21 extend in parallel to a reference plane. At the end of the arm there is a contact element 31, designed to contact and move the passive element 4 by means of contacting a contact area 41 of the passive element 4. This contact area is not necessarily in a fixed relation to the moving passive element 4, rather it is the location where the contact region 31 currently contacts the passive element 4, as the passive element 4 rotates about a rotary movement axis or translates relative to the active element 1.

As explained in US 7'429'812 B1 cited above, an excitation frequency of a voltage generator driving the excitation means 23, which can be a piezoelectric element, can be varied, and depending on the frequency different modes of mechanical oscillations of the arms will be generated. For example, in one mode the contact region 31 will - seen in a projection onto the reference plane - rotate clockwise, in another it will rotate counter clockwise. As another example, in one mode the contact region 31 will move back and forth at a first angle, and in another mode at a second angle. Depending on the suspension of the passive element, i.e. rotary or linear or combined rotary-linear, the passive element will move accordingly.

The following embodiments operate according to the same basic principles. If not stated otherwise, the elements described so far, if present, have essentially the same function. The location of the excitation means 23 relative to the resonator 2 is represented in a schematic manner by a rectangle corresponding to the contour of the excitation means 23 attached to one or both sides of the resonator 2.

The protrusion 33 is linked to the remainder of the arm 21 by a necking 35. This necking 35 corresponds to a flexurally weaker region along the arm. That is, the stiffness of the arm to bending around an axis normal to the reference plane 28 is lower at the necking 35 than in other places. The necking 35 can thus be considered to be an elastic connection. When in operation, with the arm oscillating, the protrusion can exhibit an oscillating movement including a small rotation around the necking 35. This in turn can lead to a corresponding movement of the contact element that is arranged at the same end of the arm.

A first direction in which the protrusion 33 extends lies at a first angle α relative to the arm direction 21a. A second direction in which the contact element 31 extends lies at a second angle β relative to the arm direction 21a.

A first wear suppressing element 83 is arranged on the contact element 31 and a second wear suppressing element is 84 arranged on the passive element 4 in the contact area 41.

Oscillation modes of such an arm are explained in WO 2022/218989 A1.

In other embodiments, the necking 35 and/or the first protrusion 33 are not present, but the first contact element 31 still performs an oscillatory movement that drives the passive element 4 relative to the active element 1.

Most of the following embodiments show active elements 1 with two arms, but the types of attachments, inserts, etc. shown can of course be implemented with active elements 1 with one or with more than two arms.

**Figures 2** to **4** show exemplary drive types to which the invention can be applied. The Figures show drive elements each with an insert 80, but instead of the insert being present, another type of wear suppressing element can be present. The respective resonators 2 lie in or parallel to a reference plane 28. **Figures 2** and **3** each show an active element 1 with two drive elements having a common resonator 2 extending in a common reference plane, and a first arm 21 and second arm 22 arranged to drive a common passive element 4. The first arm 21 and second arm 22 are arranged in mirror symmetry, with a resonator axis 24 being its axis of symmetry. Each of the first arm 21 and second arm 22 comprise a respective first contact element 31 and second contact element 32, at the end of which an insert 80 is attached. In a drive based on **Figure 2****,** the first contact element 31 and second contact element 32 extend toward one another, and the passive element 4 is arranged between the contact elements and moves in the direction of the resonator axis 24. In a drive based on **Figure 3****,** the first contact element 31 and second contact element 32 extend away from one another, and the passive element (not shown) is arranged with two driven sections with the first contact area and second contact area the contact elements outside the contact elements. In a drive based on **Figure 4****,** only one (first) contact element 31 is present, and the passive element (not shown) is supported by a bearing arm 8.

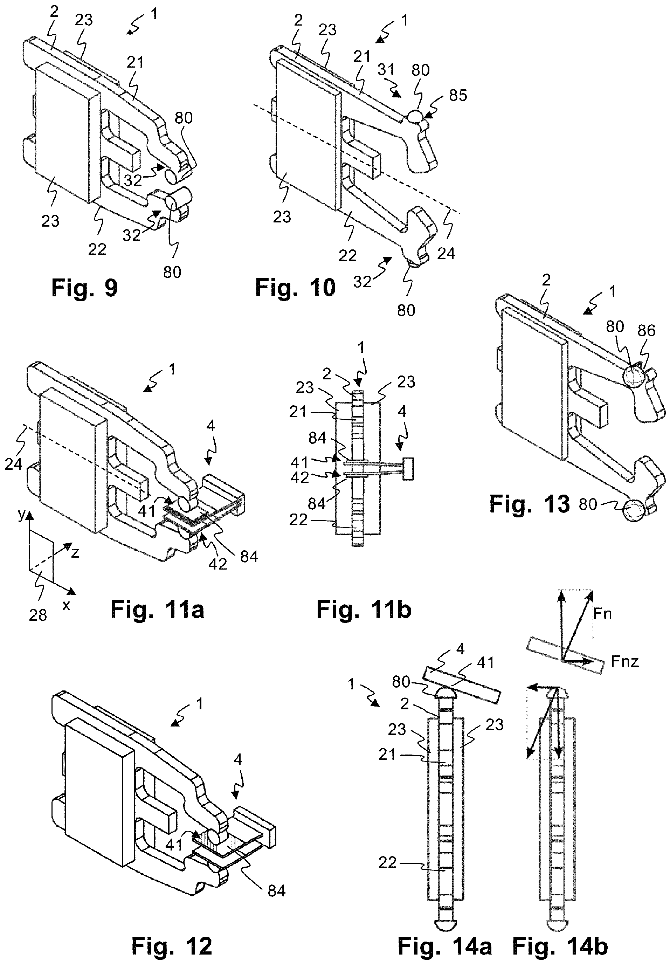

In general, the active elements combined with the active elements 1 shown herein can be shaped and arranged to move as presented in WO 2022/218989 A1, incorporated herein by reference in its entirety. In particular, reference is made to the Figures 9, 10 and 11 and the associated parts of the description.

**Figures 5** to **7** show different ways in which inserts 80 can be attached to the resonator 2. The Figures show the inserts 80 being of cylindrical or half-cylindrical shape, but in each case, inserts 80 with other shapes can be attached in an analogous manner.

**Figure 5a-5b** shows the inserts 80 being held in the resonator 2 in a press fit. A clamping recess 87 is shaped in the resonator 2, with slightly smaller dimensions than the outside shape of the insert 80, and the insert 80 is clamped in the clamping recess 87 without the need for gluing or other type of bonding. In the embodiment shown, the shape of the clamping recess 87 is a section of an inner circular cylinder, and the insert 80 is a circular cylinder.

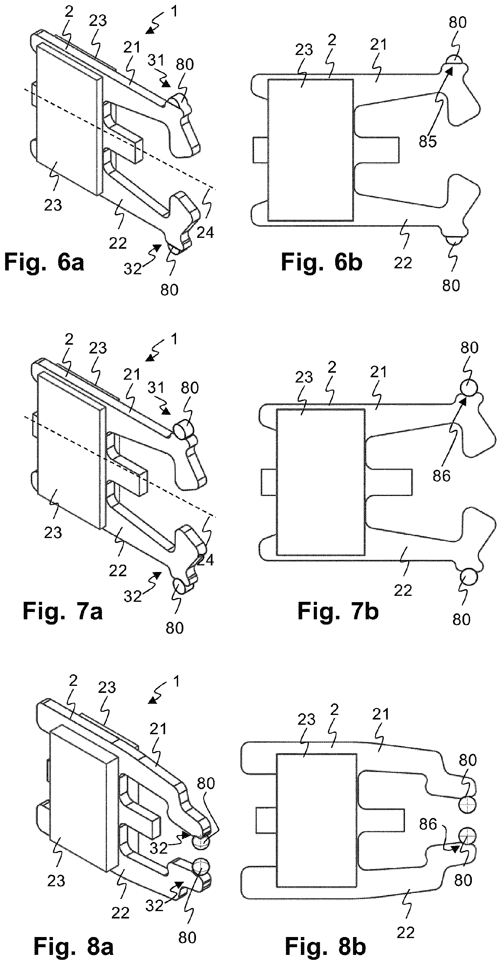

**Figure 6a-6b** and **7a-7b** show the inserts 80 being held in the resonator 2 by bonding, such as gluing or welding or soldering. The resonator 2 comprises at its first contact element 31 and second contact element 32 an attachment surface 85, and the insert 80 a correspondingly shaped surface at which it is bonded to the attachment surface 85. In the embodiment of **Figure 6a-6b****,** the insert 80 has the shape of a partial or half cylinder, and the attachment surface 85 is a flat surface. In the embodiment of **Figure 7a-7b****,** the insert 80 has the shape of a complete cylinder, and instead of the flat attachment surface 85 there is an gluing recess 86 into which the insert 80 fits.

**Figures 8** to **10** show different shapes of inserts 80, in addition to the shapes already shown. **Figure 8a-8b** shows spherical inserts 80. As an example, the attachment is by bonding to a gluing recess 86 of the respective first contact element 31 or second contact element 32. **Figure 9** shows cylindrical inserts 80 with a length of the cylinders being longer than a thickness of the resonator 2. That is, the inserts 80 extend, in one or both directions, outward of bounding planes corresponding to the outer surfaces of the resonator 2 parallel to the reference plane 28. This allows to increase the area of contact between the active element 1 and the passive element 4. **Figure 10** shows half-spherical inserts 80 bonded to a flat attachment surface 85.

**Figures 11** to **12** show different types of passive elements 4 and different ways of implementing a wear suppressing element. In contrast to a solid element constituting the passive element 4, as in **Figure 2****,** the passive elements 4 are resilient within themselves. That is, the first contact area 41 (interacting with the first arm 21) and the second contact area 42 (interacting with the second arm 22) are arranged to be elastically moved relative to one another. This can be, as shown by the tweezer-like configuration in the figures, by the first contact area 41 and second contact area 42 being elastically mounted on a common body of the passive element 4. **Figure 11** shows second wear suppressing elements 84 being separate elements arranged on the respective contact areas. **Figure 12** shows second wear suppressing elements 84 being hardened sections of the material of the respective contact areas. In embodiments, not illustrated, the second wear suppressing elements 84 are implemented by the entire part on which the first contact area 41 or second contact area 42 are arranged being made of a wear suppressing material.

**Figure 13** shows a combination of attachment elements for attaching an insert 80 to a contact element 31. The one or more inserts 80 are arranged asymmetrically in relation to a pair of bounding planes corresponding to the outer surfaces of the resonator 2 and parallel to the reference plane 28. In other words, the active element 1 and in particular the resonator 2 resonator can be mirror-symmetric with regard to a bisecting plane that is parallel to the reference plane 28. Then one or more inserts 80 are arranged asymmetrically to the bisecting plane. In this way, contact points at which the insert 80 is in contact with the passive element 4 can also be arranged asymmetrically in relation to said pair of bounding planes or the bisecting plane.

The inserts 80 are placed against or in a gluing recess 86 and attached by adhesive bonding. In the embodiment shown, the gluing recess 86 is a cutout shaped as an inner cylinder or partial inner cylinder. The insert 80 is spherical and is placed against an edge of the cylinder or partial cylinder. This precisely defines the position of the insert 80 on the arm and the contact element 31. The adhesive is placed in the inner cylinder and is in contact with the inner surface of the inner cylinder and the outer surface of the insert 80. This establishes the adhesive bond between the insert 80 and the resonator 2. In embodiments, the gluing recess 86 is shaped to correspond to the outer surface of the insert 80. It can be a recess shaped in one of the surfaces of the resonator that is parallel to the reference plane 28.

In embodiments not illustrated, the insert 80 is ellipsoidal or spherical and lies within the inner cylinder or partial inner cylinder. In can be clamped in this position and/or glued in this position.

**Figures 14a** and **14b** show the contact area 41 being pressed against the contact element 31 with a pre-stress force Fn that has a non-zero component Fnz that is normal to the reference plane 28. This configuration of forces is well suited in combination with the insert 80 being shaped as an ellipsoid, sphere or partial sphere or with a cylindrical surface parallel to the direction of movement of the passive element 4, which usually is parallel to the resonator axis 24.

While the invention has been described in present embodiments, it is distinctly understood that the invention is not limited thereto, but may be otherwise variously embodied and practised within the scope of the claims.

## Claims

1. A drive element for driving a **passive element** (4) relative to an **active element** (1), wherein the active element (1) comprises
a **resonator** (2) and at least one **excitation means** (23) for exciting oscillations in the resonator (2),
the resonator (2) comprising **at least one arm** (21),
the resonator (2) and the arm (21) extending in a plane, to be called **reference plane** (28) from now on,
the arm (21) comprising, at an outer end of the arm, a **contact element** (31),
the contact element (31) being movable by way of oscillating movements of the arm (21),
the passive element (4) being arranged to be driven and moved relative to the active element (1) by way of these oscillating movements;
the passive element (4) comprising a **contact area** (41), the contact area (41) being arranged to be in contact with the contact element (31);
**characterised in that**
at least one of the following is the case:
• the contact element (31) comprises an **insert** (80) made of a material that is made from a material that is different from the material of the resonator (2), in particular harder than the material of the resonator (2);
• a **first wear suppressing element** (83) is arranged on the contact element (31) and a **second wear suppressing element** is (84) arranged on the passive element (4) in the contact area (41);
• the passive element (4) is made of a wear suppressing material.

2. The drive element of claim 1, wherein the **first** wear suppressing element (83) is made of a different material, in particular a material with a higher degree of hardness than the material of the ann (21) or is created by a hardening treatment of the material of the arm (21), or is created by coating the arm (21) with a material other than the material of the arm (21).

3. The drive element of claim 1 or 2, wherein the **second** wear suppressing element (84) is made of a different material, in particular a material with a higher degree of hardness than a surrounding region of the passive element (4) or is created by a hardening treatment of the material of the passive element (4), or is created by coating the passive element (4) with a material other than the material of the passive element (4).

4. The drive element of one of claims 1 to 3, wherein the respective first or second wear suppressing element (83, 84) is made of one of
• a ceramic material, in particular a silicate, more in particular mullite;
• a plastic material, in particular a reinforced plastic material, more in particular a fibre reinforced plastic material;
• a palladium alloy, in particular a palladium-silver alloy, such as Pd75Ag25, Pd60Ag40;
• molybdenum;
• a ceramic-metal composite, in particular a mullite-molybdenum composite, such as Mu/Mo-3, Mu/Mo-9;
• a nickel alloy, in particular a nickel aluminium alloy, such as Ni-50Al, Ni-48Al, Ni-45Al;
• an amorphous nickel alloy (Vulcam Alloy).

5. The drive element of one of claims 1 to 4, with one of the following pairings of materials of the first wear suppressing element (83) and the second wear suppressing element (84), in this order:
• zirconia - zirconia;
• zirconia - palladium alloy;
• alumina - zirconia;
• silicon carbide - zirconia;
• silicon-nitrate - zirconia;
• zirconia - plastic or reinforced plastic.

6. The drive element of one of the preceding claims, wherein a contact surface of the **insert** (80) at which it comes into contact with the contact area (41) of the passive element (4) has the shape of a **cylindrical** surface, in particular wherein a cylinder axis of this cylindrical surface is normal to the reference plane (28).

7. The drive element of claim 6 wherein the insert (80) has the shape of a **cylinder** or a **half-cylinder.**

8. The drive element of one of claims 1 to 5, wherein a contact surface of the insert (80) at which it comes into contact with the contact area (41) of the passive element (4) has the shape of an **ellipsoidal** surface, in particular the shape of a rotational ellipsoid or spheroid.

9. The drive element of claim 8 wherein the insert (80) has the shape of an ellipsoid, in particular the shape of a rotational ellipsoid.

10. The drive element of one of the preceding claims, wherein the insert (80) is **attached** to the resonator (2) by a **press fit** of the insert in a **clamping recess** (87) of the resonator (2).

11. The drive element of one of the preceding claims, wherein the insert (80) is **attached** to the resonator (2) by the insert being glued on an attachment surface (85) of the contact element (31), in particular in a gluing recess (86) of the resonator (2).

12. The drive element of one of the preceding claims, wherein the contact area (41) is pressed against the contact element (31) with a pre-stress force (Fn) that has a non-zero component (Fnz) that is normal to the reference plane (28).

13. The drive element of one of the preceding claims, wherein one or more inserts (80) are arranged asymmetrically in relation to a bisecting plane, the bisecting plane being parallel to the reference plane (28) and the resonator (2) being essentially mirror-symmetric relative to the bisecting plane; in particular wherein contact points at which the insert (80) is in contact with the passive element (4) are arranged asymmetrically in relation to the bisecting plane.

14. A drive unit for driving a **passive element** (4) relative to an **active element** (1), wherein the active element (1) comprises at least two drive elements according to one of claims 1 to 13, the at least two drive elements in combination comprising a common resonator (2) extending in a common reference plane, and a first arm (21) and second arm (22) arranged to drive a common passive element (4), and in particular wherein the first arm (21) and second arm (22) are arranged **in mirror symmetry, with a resonator axis (24) being its axis of symmetry.**

15. The drive unit of claim 14, wherein the first arm (21) comprises a first contact element (31) and a first protrusion (33), and the second arm (22) comprises a second contact element (32) and a second protrusion (34), and wherein
• it is either the case that the first contact element (31) and second contact element (32) extend **toward** one another, and in particular where in the first protrusion (33) and second protrusion (34) extend **away from** one another;
• or it is the case that the first contact element (31) and second contact element (32) extend **away from** one another, and in particular where in the first protrusion (33) and second protrusion (34) extend **toward** one another.

16. The drive element of one of claims 1 to 13, or the drive unit of one of claims 14 to 15, wherein the drive element or the drive unit is configured for a **pre-stress** force to be present between the contact element (31) of the active element (1) and the contact area (41) of the passive element (4) when the drive is not oscillating, that is, when the excitation means (23) are not being excited.

17. The drive element of one of claims 1 to 13, or the drive unit of one of claims 14 to 16, wherein the passive element (4) is arranged to translate along a **linear** movement axis (26), the linear movement axis (26) being parallel to the reference plane (28), and in particular, for the drive unit, also parallel to the resonator axis (24).

18. The drive element of one of claims 1 to 13, or the drive unit of one of claims 14 to 16, wherein the passive element (4) is arranged to rotate around a **rotary** movement axis (29), the rotary movement axis (29) being parallel to the reference plane (28), and in particular, for the drive unit, also perpendicular to the resonator axis (24).

19. The drive element of one of claims 1 to 13, or the drive unit of one of claims 14 to 18 wherein a resonator length is defined as the dimension of the resonator along the resonator axis (24), from the ends of the arms (21, 22) to the opposing ends of their counterweight sections, and wherein the extension (d) of each flat region, projected onto the reference plane (28), is between one tenth and one hundredth of the resonator length, in particular between one twentieth and one eightieth of the resonator length.

20. The drive element of one of claims 1 to 13, or the drive unit of one of claims 14 to 19, wherein the length of the resonator (2) is between three and five millimetres, in particular four millimetres, and the extension (d) of the flat region is between 0.05 millimetres and 0.15 millimetres, in particular between 0.08 millimetres and 0.12 millimetres, in particular 0.1 millimetres.
